(19) Europäisches Patentamt
European Patent Office
Office européen des brevets

(11) **EP 2 976 552 B1**

(12) **EUROPÄISCHE PATENTSCHRIFT**

(45) Veröffentlichungstag und Bekanntmachung des Hinweises auf die Patenterteilung:
**02.08.2017 Patentblatt 2017/31**

(21) Anmeldenummer: **14707767.1**

(22) Anmeldetag: **04.03.2014**

(51) Int Cl.:
**F16H 55/08** (2006.01)

(86) Internationale Anmeldenummer:
**PCT/EP2014/054110**

(87) Internationale Veröffentlichungsnummer:
**WO 2014/146892 (25.09.2014 Gazette 2014/39)**

(54) **VERZAHNUNG EINES ZAHNRADS**

TOOTHING OF A GEARWHEEL

DENTURE DE ROUE DENTÉE

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **21.03.2013 DE 102013004861**

(43) Veröffentlichungstag der Anmeldung:
**27.01.2016 Patentblatt 2016/04**

(73) Patentinhaber: **Voith Patent GmbH**
**89522 Heidenheim (DE)**

(72) Erfinder:
• **SCHNEIDER, Lars**
**01219 Dresden (DE)**
• **ROTH, Zsolt**
**89518 Heidenheim (DE)**
• **MÜNZER, Michael**
**01069 Dresden (DE)**
• **LUBOS, Florian**
**89542 Herbrechtingen (DE)**

(74) Vertreter: **Mayer, Roland**
**Voith GmbH**
**St. Pöltener Straße 43**
**89522 Heidenheim (DE)**

(56) Entgegenhaltungen:
**DE-B3-102006 015 521     DE-B3-102008 045 318**

• **S H Yahaya ET AL: "GLOBAL ENGINEERS & TECHNOLOGISTS REVIEW", , 31. Dezember 2012 (2012-12-31), Seiten 9-22, XP055115514, Gefunden im Internet: URL:http://www.getview.org/download_pdf/august_2012/GETview_Vol2_No8_page_9-22.pdf [gefunden am 2014-04-28]**

**Beschreibung**

Die Erfindung betrifft die Verzahnung eines Zahnrads mit einer Mehrzahl von Zähnen, nach der im Oberbegriff von Anspruch 1 näher definierten Art.

Aus der DE 10 2006 015 521 B3 ist eine Verzahnung eines evolventisch wälzverzahnten Zahnrades bekannt. Der Kern der genannten Schrift beschäftigt sich dabei insbesondere mit dem sogenannten Zahnfußbereich, also dem Bereich, der die einzelnen Zähne des evolventisch wälzverzahnten Zahnrades miteinander verbindet. In der genannten Schrift wird mit dem Ziel in beide Laufrichtungen gleichermaßen lauffähige Verzahnungen bereitzustellen ein Zahnfußbereich vorgeschlagen, welcher gegenüber der üblichen wälzgefrästen Ausrundung in Form einer Ellipse ausgerundet wird. Solche Zahnräder weisen durch die elliptische Ausrundung des Zahnfußbereichs eine höhere Tragfähigkeit auf, als Zahnräder mit radialer Ausrundung.

Die DE 10 2008 045 318 B3 beschreibt als nächstliegender Stand der Technik eine Verzahnung eines Zahnrads, dessen Zahnfußbereich aus mehreren, durch mathematische Funktionen beschreibbare Kurven zusammengesetzt ist. So schließt sich ab einem relevanten Durchmesser an das Zahnprofil zunächst ein als Tangensfunktion ausgebildeter Bereich an. Dieser geht anschließend in eine Kreisbahn über, um wiederum, an der gegenüberliegenden Seite, in einer Tangensfunktion in das Zahnprofil überzugehen.

Hinsichtlich der Spannungen hat sich dieser Verlauf, sofern er sehr exakt gefertigt wird, als vorteilhaft erwiesen. Er hat jedoch einen Nachteil: So erhöht sich der Rechenaufwand bei der Konstruktion des Zahnrads, da die Parameter für die genaue Lage der Kurven zueinander, beispielsweise die Lage des Übergangs von der Tangensfunktion zur Kreisbahn, exakt ermittelt werden müssen.

Ausgehend von diesem vorbekannten Stand der Technik ist es die Aufgabe der vorliegenden Erfindung, eine Verzahnung für ein wälzverzahntes Zahnrad bereitzustellen, welche die genannten Nachteile vermeidet.

Diese Aufgabe wird erfindungsgemäß durch die im kennzeichnenden Teil von Anspruch 1 genannten Merkmale gelöst. Vorteilhafte Ausgestaltungen und Weiterbildungen ergeben sich aus den hiervon abhängigen Unteransprüchen.

Eine erfindungsgemäße Verzahnung eines Zahnrads umfasst eine Mehrzahl von Zähnen, deren Zahnflanken einen Hauptbereich und einen Zahnfußbereich aufweisen. Dabei erstreckt sich der Zahnfußbereich im Stirnschnitt oder Normalschnitt in Blickrichtung parallel zur Drehachse des Zahnrads betrachtet von einem Fußkreis bis zu einem Hauptkreis.

Wenn in der vorliegenden Erfindung von Radius, Kreis oder Durchmesser die Rede ist, so ist zu dessen Beschreibung stets der entsprechende Durchmesser bezogen auf die Drehachse des erfindungsgemäß verzahnten Zahnrads gemeint. Die erfindungsgemäße Verzahnung kann dabei als Innen- oder Außenverzahnung ausgeführt sein. Unabhängig davon, ob eine Innen- oder Außenverzahnung vorliegt, wird der entsprechende Durchmesser immer bezogen auf die Drehachse des erfindungsgemäß verzahnten Zahnrads angegeben.

Im Sinne der vorliegenden Erfindung ist unter dem Begriff Stirnschnitt ein Schnitt durch das Zahnrad senkrecht zu der Drehachse des Zahnrads gemeint. Hingegen wird unter dem Normalschnitt ein Schnitt durch das Zahnrad senkrecht zu einer in Längserstreckung der Verzahnung verlaufenden Flankenlinie verstanden. So kann beispielsweise bei Schrägverzahnungen die Konstruktion der Fußkontur im Stirnschritt erzeugt werden. Anschließend kann dann für die Konstruktion des benötigten Werkzeugs wie Wälzwerkzeugs, die zu schaffende Verzahnung zum Beispiel in den Normalschnitt transformiert werden. Auch ein umgekehrtes Vorgehen wäre prinzipiell denkbar.

Als Hauptbereich im Sinne der vorliegenden Erfindung wird dabei - im genannten Schnitt gesehen - jener Abschnitt der Verzahnung, welcher zwischen dem Kopfkreis im Bereich der Köpfe der Zähne und dem Hauptkreis $d_H$ liegt, bezeichnet. Somit schließt sich im Falle einer Außenverzahnung radial innerhalb des Hauptkreises $d_H$, insbesondere unmittelbar, an den Hauptbereich der Zahnfußbereich an. Im Falle der Innenverzahnung schließt sich dieser analog radial außerhalb des Hauptkreises $d_H$ an. Wird bei der Verzahnung keine Protuberanz vorgesehen, so entspricht der Hauptbereich einem Nutzbereich. Der Nutzbereich bezeichnet dabei den Bereich, der von dem Kopfkreis bis zu einem Durchmesser $d_N$, dem sogenannten Nutzkreis verläuft. Im Nutzbereich wälzen die Zahnflanken des Zahnrads und des entsprechenden Gegenzahnrades aufeinander ab. Bei Vorsehen einer Protuberanz hingegen umfasst der Hauptbereich zusätzlich zum Nutzbereich einen Protuberanzbereich, in dem die Protuberanz angeordnet ist. Der Protuberanzbereich verläuft im Falle der Außenverzahnung zwischen dem Nutzkreis $d_N$ und einem radial innerhalb des Nutzkreises $d_N$ angeordneten Protuberanzkreis $d_P$, im Falle der Innenverzahnung zwischen dem Nutzkreis $d_N$ und einem radial außerhalb des Nutzkreises $d_N$ angeordneten Protuberanzkreis $d_P$. Der Protuberanzkreis $d_P$ ergibt sich geometrisch aus dem gewählten Protuberanzprofil der Protuberanz. Der Protuberanzkreis $d_P$ kann bei einer Außenverzahnung beispielsweise durch den Kreis an den radial innersten Punkt und im Falle der Innenverzahnung durch den Kreis an den radial äußersten Punkt des Protuberanzprofils charakterisiert sein. Bei Vorsehen einer Protuberanz fällt somit der Hauptkreis $d_H$ mit dem in Bezug auf den Nutzkreis $d_N$ weiter radial innen (bei Außenverzahnungen) oder radial außen (bei Innenverzahnungen) liegenden Protuberanzkreis $d_P$ zusammen. Zusammenfassend kann man sagen, dass sich - unabhängig davon, ob einen Innen- oder Außenverzahnung vorliegt - der Hauptbereich ohne Vorsehen einer Protuberanz vom Kopfkreis zum Nutzkreis $d_N$ und bei Vorsehen einer Protuberanz vom Kopfkreis zum Protuberanzkreis $d_P$ erstreckt.

Der Übergang des Zahnfußbereichs in den Hauptbereich - vom Zahnfußbereich aus betrachtet - erfolgt gemäß der Erfindung in einem relevanten Durchmesser $d_r$. Im Sinne der vorliegenden Erfindung kann der relevante Durchmesser $d_r$ so gewählt werden, dass er mit dem Hauptkreis zusammenfällt. Für den Fall, dass keine Protuberanz vorgesehen wird, entspricht - wie oben beschrieben - der Hauptbereich dem Nutzbereich, sodass der relevante Durchmesser $d_r$ gleich dem Hauptkreis $d_H$ und damit gleich dem Nutzkreis $d_N$ ist. Im Allgemeinen wird der relevante Durchmesser $d_r$ bei Außenverzahnungen etwas kleiner und bei Innenverzahnungen etwas größer als der entsprechende Nutzkreis $d_N$ gewählt, um eine hinsichtlich der Fertigungstoleranz und der Lagerungstoleranz der Zahnräder sinnvolle Sicherheit zu gewährleisten. Im Falle einer Protuberanz entspricht er dem Protuberanzkreis $d_P$ oder wird, wie geradeeben mit Beispiel auf die Innen- und Außenverzahnung dargelegt, ebenfalls unter Gewährleistung einer sinnvollen Sicherheit analog etwas kleiner oder größer als der entsprechende Protuberanzkreis $d_P$ gewählt.

Gemäß der Erfindung sind nun die Zahnflanken im Zahnfußbereich, jeweils im Stirnschnitt oder Normalschnitt gesehen, ab dem relevanten Durchmesser $d_r$ in Richtung auf den Fußkreis hin als Bezierkurve ausgeführt. Im Falle der Außenverzahnung bedeutet "in Richtung auf den Fußkreis hin", insbesondere in radialer Richtung auf den Zahnradmittelpunkt und im Falle der Innenverzahnung insbesondere in Radialrichtung vom Zahnradmittelpunkt weg nach außen. Die Bezierkurve geht dabei im relevanten Durchmesser $d_r$ jeweils in einem Hauptpunkt tangentenstetig in das Zahnprofil des Hauptbereichs über. Der jeweilige Hauptpunkt entspricht dabei dem entsprechenden Anfangs- oder Endpunkt der Bezierkurve. Für den Fall, dass der Hauptkreis so gewählt wird, dass er mit dem relevanten Durchmesser $d_r$ zusammenfällt, liegen die beiden Hauptpunkte auf dem Hauptkreis $d_H$. Ansonsten liegen die Hauptpunkte auf dem vom Hauptkreis $d_H$ verschiedenen relevanten Durchmesser $d_r$.

Die Vorteile der erfindungsgemäßen Lösung sind wie folgt: Es wird nur noch eine einzige zusammenhängende und stetige Kurve, die im Zahnfußbereich zwei aufeinanderfolgende Zahnflanken miteinander verbindet, verwendet. Da die Bezierkurve stetig ihre Krümmung ändert, entsteht keine Stelle, an der ein Krümmungssprung auftritt. Somit ergibt sich auch keine abrupte Änderung im Spannungsverlauf des Zahnfußbereichs. Hierdurch können sich die Spannungen gleichmäßiger und insgesamt langgestreckter verteilen.

Somit haben die Erfinder eine Lösung gefunden, die auch bei Vorsehen von Protuberanzen einen optimalen Spannungsverlauf ermöglicht. Denn auch bei Vorsehen einer Protuberanz können sich die Spannungen gleichmäßiger über den erfindungsgemäßen Zahnfußbereich und damit insgesamt langgestreckter verteilen. Die Tragfähigkeit des Zahnfußbereichs wird damit auch bei Vorsehen einer Protuberanz erheblich verbessert.

Gleichzeitig ermöglicht die Verwendung einer Bezierkurve geringe Rechenleistung im Besonderen bei der Konstruktion eines solchen Zahnrads. Durch die weniger rechenintensive Bezierkurve können Optimierungen der bevorzugten Lage der Haupt- und/oder Kontrollpunkte hinsichtlich geringer Fußspannungen erheblich vereinfacht werden. Dies ist besonders dann der Fall, wenn die Verzahnung symmetrisch ausgeführt wird, denn dann muss nur noch ein einziger Parameter, nämlich die Lage des einen Kontrollpunkts auf der Tangente durch den Hauptpunkt errechnet werden. Der zweite, auf der der Symmetrieachse gegenüberliegenden Seite benötigte Kontrollpunkt wird dann hinsichtlich seiner Koordinaten einfach gespiegelt.

Die Verwendung der Bezierkurven hat damit also hinsichtlich der Konstruktion und der Fertigung den entscheidenden Vorteil, dass lediglich zwei Übergangspunkte, nämlich der tangentenstetige Übergang im Bereich der Hauptpunkte entsprechend berechnet und definiert werden müssen. Der Rest ergibt sich unmittelbar aus der Bezierkurve, sodass eine deutliche Vereinfachung bei der Konstruktion der Verzahnung erzielt werden kann. Dennoch weist diese weiterhin eine sehr gute Tragfähigkeit auf, welche in jedem Fall gleich oder insbesondere besser als die Tragfähigkeit der im eingangs genannten Stand der Technik beschriebenen Verzahnungen ist.

Besonders bevorzugt ist der tangentenstetige Übergang zwischen dem Protuberanzprofil und der Bezierkurve um einen Fußfreischnitt $F_S$ von der Zahnflanke beabstandet. Unter Fußfreischnitt $F_S$ versteht der Fachmann dabei jenes Maß, das sich einschließlich von einer Bearbeitungszugabe, wie dem Schleifaufmaß, auf der Zahnflanke des Hauptbereichs parallel zur Zahnflanke bis zu dem eigentlichen Protuberanzprofil, insbesondere bis zu dem "tiefsten" in die Verzahnung hineinreichenden Punkt des Protuberanzprofils, beispielsweise in Umfangsrichtung gesehen, erstreckt.

Dabei wäre es denkbar, dass die wenigstens zwei Kontrollpunkte innerhalb oder außerhalb einer von den Tangenten und der Bezierkurven aufgespannten Fläche liegen. Dies hätte jedoch den Nachteil eines unstetigen Übergangs im Bereich der Hauptpunkte, mit Einbußen bei der Tragfähigkeit. Bevorzugt weist die Bezierkurve daher wenigstens zwei Kontrollpunkte auf, die jeweils im Zahnfußbereich auf der Tangente an den Hauptpunkt liegen. Man könnte auch sagen, dass die Hauptpunkte, welche den Anfangs- und Endpunkt der durchgehenden Bezierkurve bilden, jeweils mit dem Punkt, an dem der Hauptbereich in den Zahnfußbereich übergeht, zusammenfallen.

Gemäß einer bevorzugten Ausführungsform ist die Bezierkurve eine Bezierkurve dritten oder höheren Grades. Insbesondere ist sie eine kubische Bezierkurve, umfassend genau zwei Kontrollpunkte, von denen ein jeder auf der entsprechenden, durch den Hauptpunkt verlaufenden Tangente liegt, wobei der Abstand k eines jeden Kontrollpunkts zu seinem Hauptpunkt auf der Tangente sich wie folgt berechnet:

$$k = (0{,}25 + 0{,}1 \times f) \times l$$

mit:

$$0 < k \leq 1 \text{ und } 0 \leq f \leq 3,$$

wobei l für den Abstand des einen Hauptpunkts vom Schnittpunkt (S) der Tangenten steht.

Bevorzugt beträgt der Faktor f zwischen 0,5 und 1,5.

Die Verzahnung kann dabei symmetrisch oder asymmetrisch ausgeführt sein. Im ersteren Fall sind die Zahnflanken von im Stirnschnitt oder Normalschnitt benachbarten Zähnen jeweils symmetrisch zueinander ausgebildet, wobei die Symmetrieachse den Fußpunkt im Fußkreis schneidet und die Tangenten symmetrisch zur Symmetrieachse verlaufen und sich bei Vorsehen einer Außenverzahnung radial innerhalb und bei Vorsehen einer Innenverzahnung radial außerhalb des relevanten Durchmessers in einem Schnittpunkt, der auf der Symmetrieachse liegt, schneiden. Bei einer asymmetrischen Ausführungsform der Verzahnung sind die Zahnflanken von im Stirnschnitt oder Normalschnitt benachbarten Zähnen jeweils asymmetrisch zueinander ausgebildet. Die Tangenten schneiden sich in einem nicht auf der Symmetrieachse liegenden Schnittpunkt.

Gemäß den beschriebenen Ausführungsformen kann die Bezierkurve ein Kontrollpolygon aufweisen, wobei das gesamte Kontrollpolygon, welches die Hauptpunkte sowie die wenigstens zwei Kontrollpunkte miteinander verbindet, innerhalb der von den Tangenten und der Bezierkurve aufgespannten Fläche liegt.

Die erfindungsgemäße Verzahnung ist beispielsweise für gerade, schräg oder bogenförmig verlaufende Verzahnungen, wie Stirnverzahnungen, im Zahnfußbereich geeignet. Die damit verbundene Steigerung der Festigkeit lässt sich ebenso bei Verzahnungen von zum Beispiel Kegelrädern oder andersartigen Zahnrädern erzielen.

Grundsätzlich ist die erfindungsgemäße Verzahnung, insbesondere die Ausgestaltung des Zahnfußes auch für Zahnstangen, Kegelräder, Beveloidräder, Kronenräder, Schraubenräder oder Schneckenräder und verschiedene Planverzahnungen denkbar, wobei die Zahnfußform dann im jeweiligen Stirnschnitt oder Normalschnitt zu bestimmen ist und sich beispielsweise bei ein- und mehrgängigen Schneckenrädern dann über die Länge des als Ganzes abgewickelten Zahns selbstverständlich aufgrund der sich typischerweise ändernden Geometrie des Zahns selbst, also beispielsweise der Zahnhöhe und der Zahnbreite, entsprechend verändern.

Eine erfindungsgemäße Verzahnung ist also grundsätzlich bei verschiedenen Zahnrädern und bei mit Zähnen versehenen Elementen zu realisieren. Dabei ist die Kombination auch mit beliebigen Zahnprofilen im Hauptbereich und insbesondere im Hauptbereich und insbesondere im Nutzbereich denkbar. Besonders bevorzugt ist jedoch die Verwendung mit einem Hauptbereich und insbesondere im Nutzbereich als Rollkurve (Evolvente oder Oktoide) ausgestalteten Zahnprofil, insbesondere einem evolventischen Zahnprofil. Dieser gängige im Maschinenbau allgemein übliche Typ einer Verzahnung eignet sich für die erfindungsgemäße Ausgestaltung des Zahnfußbereichs besonders gut. Die größten Tragfähigkeitssteigerungen durch die neuartige Gestaltung des Zahnfußbereiches wurden bei derartigen evolventisch verzahnten Zahnrädern ermittelt.

Insbesondere in dem Fall, in dem die erfindungsgemäße Verzahnung für eine Zahnstange vorgesehen wird, kann diese Verzahnung anhand eines mit der Zahnstange kämmenden Gegenrades entsprechend konstruiert und dann abgewickelt werden. Das bisher Gesagte gilt hierbei analog.

Im Nachfolgenden werden anhand der Figuren in Ausführungsbeispielen das Aussehen und die Funktionalität der neuen Zahnfußform am Beispiel einer Zahnlücke eines evolventisch außenverzahnten Zahnrades im Stirnschnitt oder Normalschnitt beschrieben. Grundsätzlich kann diese Ausgestaltung des Zahnfußbereichs, wie bereits ausführlich dargelegt, jedoch auch auf verschiedene Arten von Zahnrädern und Verzahnungen, wie auch Innenverzahnungen, angewandt werden.

Es zeigen:

Figur 1      die Bestimmungsgrößen an einem evolventisch außenverzahnten Zahnrad mit einer Stirnradverzahnung im Stirnschnitt anhand zweier Ausführungsformen;

Figur 2      die Ausgestaltung des Zahnfußbereiches in einem Zahnrad mit symmetrischer Verzahnung gemäß Figur 1 analog der Erfindung;

Figur 3      die Ausgestaltung des Zahnfußbereiches in einem Zahnrad mit asymmetrischer Verzahnung gemäß Figur 1 analog der Erfindung; und

Figuren 4a und 4b      zwei weitere Ausführungsformen unter Weiterbildung der Darstellungen in Figur 1;

Figur 5          eine Detaildarstellung einer Verzahnung, wie sie in der rechten Darstellung der Figur 1 oder in der Figur 4b gezeigt ist.

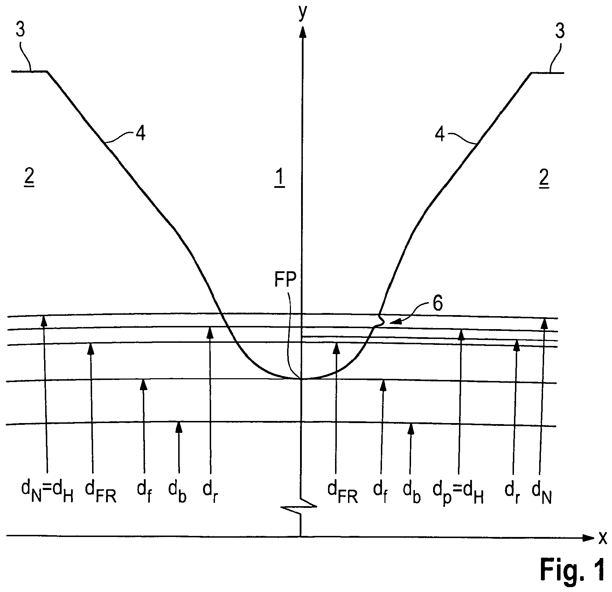

In Figur 1 sind die Bestimmungsgrößen an einer Zahnlücke 1 für zwei Ausführungsformen in einem teilweisen Stirnschnitt senkrecht zu der nicht dargestellten Drehachse eines außenverzahnten Zahnrads - in Blickrichtung der Drehachse - dargestellt. Als Bezugsgrößen sind dabei die Koordinaten x, y vermerkt, wobei die y-Achse gleichzeitig die Symmetrieachse der Zahnlücke 1 ist. Die x-Achse, genauer der Ursprung des dargestellten x-y-Kooridnatensystems, soll dabei durch die nicht dargestellte Drehachse des Zahnrads verlaufen. Dabei zeigt die Darstellung von Figur 1 links der Symmetrieachse eine Ausführungsform, bei der die erfindungsgemäße Verzahnung keine Protuberanz aufweist. Hingegen zeigt die Darstellung rechts der Symmetrieachse eine Ausführungsform, bei der eine Protuberanz 6 vorgesehen ist. Letztere ist übertrieben groß und unmaßstäblich dargestellt.

Die in beiden Darstellungen angedeuteten Abschnitte der beiden Zähne 2 sind dabei in ihrem Kopfbereich 3 durch einen hier nicht dargestellten Kopfkreis beschränkt. Der Kopfkreis kann dem Außendurchmesser des Kopfbereichs 3 entsprechen. Das hier jeweils beispielhaft gewählte Zahnprofil 4 ist eine evolventische Zahnflankenform, welche jeweils bis zu einem Durchmesser $d_N$ des sogenannten Nutzkreises von der hier nicht dargestellten Zahnflanke des Zahnes eines mit diesem Zahnrad kämmenden Gegenzahnrades beziehungsweise Zahnelementes genutzt wird. Mit Bezug auf beide in Figur 1 dargestellte Ausführungsformen wird der Abschnitt zwischen dem Kopfkreis im Bereich der Köpfe 3 der Zähne 2 und einem Nutzkreis $d_N$ nachfolgend als Nutzbereich bezeichnet. Außerdem ist noch auf den Durchmesser hinzuweisen, bis zu dem ein Zahn eines mit diesem Zahnrad kämmenden Gegenzahnrades beziehungsweise Zahnelementes in die Zahnlücke eintaucht. Dieser Durchmesser wird typischerweise als Freikreisdurchmesser $d_{FR}$ bezeichnet. Der sich im Falle der hier dargestellten Außenverzahnung jeweils daran in Richtung der Zahnradmitte anschließende Bereich zwischen dem Nutzkreis $d_N$ und dem tiefsten, also radial innersten Punkt der Zahnlücke 1, in welcher der sogenannte Fußkreis $d_f$ liegt, wird nachfolgend als Zahnfußbereich der Zahnlücke 1 bezeichnet. Für den Fall, dass eine Innenverzahnung vorgesehen wird, schließt sich der Bereich zwischen dem Nutzkreis $d_N$ und dem radial äußersten Punkt der Zahnlücke 1 an den Freikreisdurchmesser $d_{FR}$ in Richtung weg von der Zahnradmitte an.

Der Schnittpunkt der Symmetrieachse y mit dem Fußkreis $d_f$ ist dabei der Fußpunkt FP der Zahnlücke 1.

Die bis hierher bezeichneten Größen sind bei allen Zahnrädern gängige und übliche Größen, auf welche sich die nachfolgende detaillierte Beschreibung der erfindungsgemäßen Ausgestaltung des Zahnfußbereichs, welcher hier bereits in der erfindungsgemäßen Art und Weise dargestellt ist, stützen wird.

Zusätzlich sind bei den hier dargestellten Ausführungsformen des evolventischen Zahnprofils 4 weitere Größen von Bedeutung. So ist in Figur 1 der sogenannte Grundkreis $d_b$ eingezeichnet, welcher für die Konstruktion der Flankenform 4 der evolventischen Verzahnung relevant ist. Außerdem soll noch kurz der bei Verzahnungen allgemein gebräuchliche Modul m erwähnt werden, welcher sich aus dem hier nicht dargestellten Teilkreisdurchmesser geteilt durch die Zähnezahl beziehungsweise die Teilung p geteilt durch die Kreiszahl $\pi$ ergibt. Ferner zeigen beide Ausführungsformen der Figur 1 einen Hauptkreis $d_H$, welcher zusammen mit dem Kopfkreis einen Hauptbereich des Zahnprofils definiert. Der Hauptbereich schließt sich vorliegend unmittelbar an den Zahnfußbereich an. In der linken Darstellung von Figur 1 entspricht der Hauptbereich dem Nutzbereich. Damit fallen Hauptkreis $d_H$ und Nutzkreis $d_N$ zusammen. In der rechten Darstellung hingegen gehört zu dem Hauptbereich neben dem Nebenbereich ein Protuberanzbereich, in dem die Protuberanz 6 angeordnet ist. Der Protuberanzbereich verläuft in diesem Fall zwischen dem Nutzkreis $d_N$ und einem gegenüber diesem radial innerhalb liegenden Protuberanzkreis $d_P$. Analog würde bei einer Innenverzahnung der Protuberanzkreis $d_P$ radial außerhalb des Nutzkreises $d_N$ liegen. Der Hauptbereich wird damit im vorliegenden Fall nach radial innen durch den Hauptkreis $d_H$, welcher dem Protuberanzkreis $d_P$ entspricht, begrenzt. Der Protuberanzkreis $d_P$ kann dabei durch das radial innerste Ende des Protuberanzprofils, welches beispielsweise ein Teil eines Kreisbogens sein kann, gehen. Bei Vorsehen einer Innenverzahnung würde der Hauptbereich somit analog nach radial außen durch den entsprechenden Hauptkreis $d_H$ begrenzt, sodass der Protuberanzkreis $d_P$ entsprechend durch das radial äußerste Ende des Protuberanzprofils gehen könnte.

Außerdem ist in der Figur 1 der Durchmesser beziehungsweise Radius zu erkennen, welcher für die Erfindung relevant ist und als relevanter Durchmesser $d_r$ bezeichnet werden soll. Der relevante Durchmesser $d_r$ im Sinne der vorliegenden Erfindung entspricht, wenn er auf den Hauptkreis $d_H$ gelegt wird, dem sogenannten Formkreis von herkömmlichen Verzahnungen. In der linken Darstellung der Figur 1 ist der relevante Durchmesser $d_r$ aus dem arithmetischen Mittel zwischen dem Nutzkreisdurchmesser $d_N$ und dem Freikreisdurchmesser $d_{FR}$ gewählt, so dass ein gewisser Sicherheitsabstand zwischen dem relevanten Durchmesser $d_r$ und dem Nutzkreisdurchmesser $d_N$ entsteht. Damit ist sichergestellt, dass ein hier nicht dargestellter Zahn eines mit dem Zahnrad kämmenden Gegenzahnelements in jedem Fall auf der berechneten Form der Zahnflanke 4, hier also der Evolvente, abläuft und nicht auf der erfindungsgemäß ausgestalteten Form der Flanke im Zahnfußbereich tragend zum Eingriff kommt. In der rechten Darstellung von Figur 1 ist der relevante Durchmesser $d_r$ im vorliegenden Fall kleiner als der Protuberanzkreis $d_P$ gewählt. Auch dies dient zur Sicherstellung eines gewissen Sicherheitsabstands, insbesondere zur Protuberanz 6. Bei einer Innenverzahnung würde der Protuberanzkreis entsprechend größer als der relevante Durchmesser gewählt. Dies kann, muss aber nicht sein.

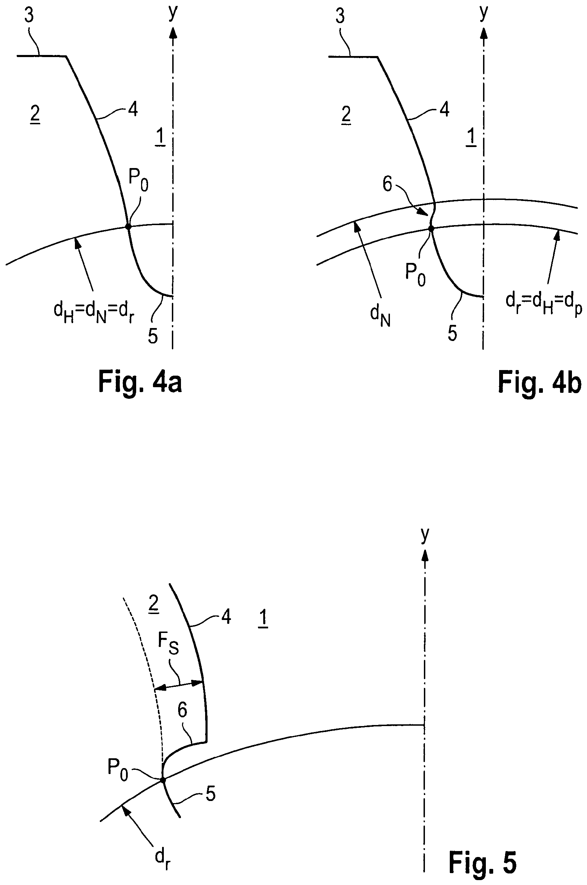

Eine Alternative zu der Wahl des relevanten Durchmessers $d_r$ gemäß der Figur 1 ist in den Figuren 4a und 4b jeweils in einem teilweisen Stirnschnitt gezeigt. Sich entsprechende Elemente sind mit entsprechenden Bezugzeichen versehen. Aus Figur 4a erkennt man, dass der relevante Durchmesser $d_r$ mit dem Hauptkreis $d_H$ zusammenfällt und gleichzeitig dem Nutzkreis $d_N$ entspricht. In diesem Fall ist analog zur linken Darstellung der Figur 1 keine Protuberanz vorgesehen. Eine solche Protuberanz 6 ist jedoch in der Figur 4b übertrieben groß und unmaßstäblich dargestellt. Sie ist im vorliegenden Fall zwischen dem Nutzkreis $d_N$ und dem relevanten Durchmesser $d_r$, welcher hier dem Hauptkreis $d_H$ und zugleich dem Protuberanzkreis $d_P$ entspricht, angeordnet.

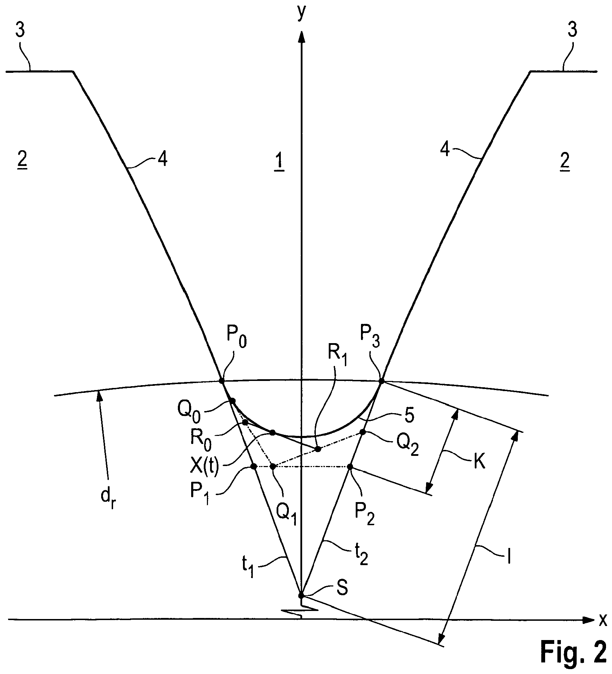

In Figur 2 ist nun die Form des Zahnfußes in einer erfindungsgemäßen Ausgestaltung ohne Protuberanz am Beispiel einer Außenverzahnung näher erläutert. Selbstverständlich könnte die dargestellte Verzahnung auch als eine Innenverzahnung, mit oder ohne Protuberanz, ausgeführt sein. Dabei sind die bereits in Figur 1 genannten Elemente auch in Figur 2 mit denselben Bezugszeichen versehen. Von den in Figur 1 erläuterten Durchmessern ist in Figur 2 nur noch der relevante Durchmesser $d_r$ eingezeichnet. Wie bereits erwähnt, geht das Zahnprofil 4 des Nutzbereichs im vorliegenden Ausführungsbeispiel aus sicherheits- und toleranzbedingten Gründen im Bereich des relevanten Durchmessers $d_r$ in die erfindungsgemäße Ausgestaltung der Zahnfußform im Zahnfußbereich tangentenstetig über. An den Punkten $P_0$ und $P_3$, auch als Hauptpunkte bezeichnet, an dem der Durchmesser $d_r$ das Zahnprofil 4 schneidet, erfolgt dieser Übergang von dem evolventischen Zahnprofil 4 in eine Bezierkurve 5.

Gemäß der Ausführungsform der Figur 2, in welcher die Symmetrieebene der dargestellten und benachbarten Zahnflanken 4 senkrecht zur Zeichenebene durch die y-Achse verläuft, ist auch der Zahnfußbereich symmetrisch zu der durch die y-Achse verlaufenden Symmetrieebene.

Dabei schneiden sich die Tangenten $t_1$ und $t_2$ an die Hauptpunkte $P_0$ und $P_3$ in dem Schnittpunkt S auf der y-Symmetrieachse. Auf den Tangenten $t_1$, $t_2$ liegen im vorliegenden Fall jeweils die Kontrollpunkte $P_1$ und $P_2$. Nahe an den Hauptpunkten $P_0$ und $P_3$ liegen auf den Tangenten $t_1$ und $t_2$ jeweils weitere Kontrollpunkte $Q_0$ und $Q_2$. Ferner ist ein weiterer Kontrollpunkt $Q_1$ vorgesehen. Die Kontrollpunkte $Q_0$, $Q_1$ und $Q_2$ bilden jeweils die Endpunkte der strichpunktiert dargestellten Geraden. Der Kontrollpunkt $Q_1$ liegt dabei auf einer doppelt strichpunktierten Gerade, welche die Kontrollpunkte $P_1$ und $P_2$ verbindet. Die jeweiligen Haupt- und Kontrollpunkte in Figur 2 sind miteinander verbunden und werden als Kontrollpolygon bezeichnet. Letzteres liegt dabei innerhalb der von den Tangenten $t_1$ und $t_2$ sowie der Bezierkurve 5 aufgespannten Fläche.

Der Abstand k der Kontrollpunkte $P_1$ und $P_2$ von den entsprechenden Hauptpunkten $P_0$ und $P_3$ entlang der jeweiligen Tangente $t_1$, $t_2$ wird dabei so gewählt, dass dieser der folgenden Beziehung entspricht:

$$k = (0{,}25 + 0{,}1 \times f) \times l$$

mit:

$$0 < k \leq 1 \text{ und } 0 \leq f \leq 3,$$

wobei l für den Abstand des jeweiligen Hauptpunkts $P_0$, $P_3$ vom Schnittpunkt S der Tangenten $t_1$, $t_2$ steht.

Zur Konstruktion der Bezierkurve, wie sie in den verbleibenden Figuren angedeutet ist, kann wie eben erläutert entsprechend auch bei den verbleibenden Figuren entsprechend verfahren werden.

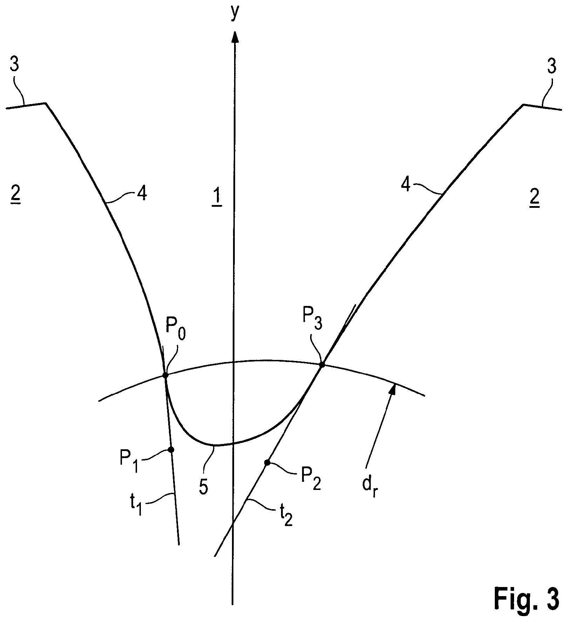

In der Darstellung der Figur 3 ist ergänzend dazu ein vergleichbarer Aufbau für eine asymmetrische Außenverzahnung zu erkennen. Eine solche Asymmetrie wäre selbstverständlich auch für Innenverzahnungen denkbar. In jedem Fall, könnte, obwohl nicht dargestellt, auch hier eine Protuberanz vorgesehen sein. Die hier strichpunktiert dargestellte y-Achse würde bei einer symmetrischen Verzahnung die Symmetrieachse analog zur y-Achse in Figur 2 darstellen. Auch bei der asymmetrischen dargestellten Verzahnung geht das Zahnprofil 4, welches hier auf den beiden Seiten der Zahnlücke 1 jeweils unterschiedlich ausgestaltet ist, in den jeweiligen Hauptpunkten $P_0$, $P_3$ tangential in die Bezierkurve 5 über. Die Kontrollpunkte $P_1$, $P_2$ liegen wiederum auf diesen Tangenten $t_1$, $t_2$, welche den tangentialen Übergang in den Hauptpunkten $P_0$, $P_3$ virtuell, in diesem Fall nach unten, fortsetzen. Ein Schnittpunkt S der Tangenten $t_1$, $t_2$ tritt auch hier in den allermeisten Fällen auf, liegt jedoch nicht auf der Symmetrieachse beziehungsweise y-Achse, wie es aus der Darstellung der Figur 3 zu erkennen ist, obwohl der Schnittpunkt hier nicht mehr innerhalb der Darstellung liegt.

Figur 5 zeigt eine Detailansicht der beispielsweise in der rechten Darstellung der Figur 1 oder in Figur 4b gezeigten Verzahnung. In Figur 5 erkennt man den tangentenstetigen Übergang zwischen dem Protuberanzprofil der Protuberanz 6 im Hauptbereich und der Bezierkurve 5 im Zahnfußbereich am Beispiel einer Außenverzahnung. Der genannte Übergang erfolgt hier in dem Hauptpunkt $P_0$, durch den der relevante Durchmesser $d_r$ geht. Der Übergang ist dabei um einen parallel zur Zahnflanke gemessenen Fußfreischnitt $F_S$ von der Zahnflanke 2 beabstandet. Das eben Gesagte gilt natürlich auch für entsprechend ausgeführte Innenverzahnungen.

Grundsätzlich und unabhängig von einer in den Figuren dargestellten spezifischen Ausführungsform lässt sich die Bezierkurve 5 wie folgt mittels des Bernsteinpolynoms mathematisch darstellen:

$$\vec{X}(t) = \sum_{i=0}^{n} \binom{n}{i} t^i \cdot (1-t)^{n-i} \cdot \vec{P_i}$$

Dabei sind $\vec{P_1}$ die Richtungsvektoren zu den Stützpunkten (Haupt- und Kontrollpunkte)

$$\vec{P_0} = \begin{pmatrix} P_{0x} \\ P_{0y} \\ 0 \end{pmatrix} \qquad \vec{P_1} = \begin{pmatrix} P_{1x} \\ P_{1y} \\ 0 \end{pmatrix} \qquad \vec{P_2} = \begin{pmatrix} P_{2x} \\ P_{2y} \\ 0 \end{pmatrix} \qquad \vec{P_3} = \begin{pmatrix} P_{3x} \\ P_{3y} \\ 0 \end{pmatrix}$$

Für kubische Bezierkurven gilt:

$$\vec{X}(t) = \sum_{i=0}^{3} \binom{3}{i} t^i \cdot (1-t)^{3-i} \cdot \vec{P_i} = (1-t)^3 \cdot \vec{P_0} + 3t(1-t)^2 \cdot \vec{P_1} + 3t^2(1-t) \cdot \vec{P_2} + t^3 \cdot \vec{P_3}$$

$$\vec{X}(t) = (-\vec{P_0} + 3 \cdot \vec{P_1} - 3 \cdot \vec{P_2} + \vec{P_3}) \cdot t^3 + (3 \cdot \vec{P_0} - 6 \cdot \vec{P_1} + 3 \cdot \vec{P_2}) \cdot t^2 + (-3 \cdot \vec{P_0} + 3 \cdot \vec{P_1}) \cdot t + \vec{P_0}$$

Mit Einführung der vektoriellen Faktoren gilt:

$$\vec{D} = -\vec{P_0} + 3 \cdot \vec{P_1} - 3 \cdot \vec{P_2} + \vec{P_3}$$

$$\vec{C} = 3 \cdot \vec{P_0} - 6 \cdot \vec{P_1} + 3 \cdot \vec{P_2}$$

$$\vec{B} = -3 \cdot \vec{P_0} + 3 \cdot \vec{P_1}$$

$$\vec{A} = \vec{P_0}$$

Somit ergibt sich die Parameterform der Bezierkurve:

$$\vec{X}(t) = \vec{D} \cdot t^3 + \vec{C} \cdot t^2 + \vec{B} \cdot t + \vec{A}$$

Werden alle Punkte $\vec{X}$ für $t \in [0;1]$ berechnet, so ergibt sich die Bezierkurve zwischen $\vec{P_0}$ und $\vec{P_3}$ mit den Kontrollpunkten $\vec{P_1}$ und $\vec{P_2}$.

Ein konkretes Beispiel für eine symmetrische Verzahnung eines Räderpaars anhand von Werten, welche exemplarisch aus den genannten Wertebereichen gewählt wurden, ist nachfolgend erläutert. Die gewählten Bezeichnungen und Formelzeichen sind dabei die, die bei Zahnrädern allgemein üblich und anerkannt sind.

Ein gemäß einer Ausführungsform verzahntes Zahnrad und dessen Gegenrad können beispielsweise die folgenden Kenngrößen haben:

Zahnrad: 1

Modul: 4

Zähnezahl: 50

Eingriffswinkel: 20°

Profilverschiebungsfaktor: 0,2

Gegenrad: 2

Modul: 4

Zähnezahl 35

Eingriffswinkel 20°

Profilverschiebungsfaktor: 0.321

Achsabstand: 172 mm

Vergleich: Verzahnung nach DIN 867

Wälzfräskontur ohne Protuberanz

Kopfhöhenfaktor $h_{\alpha P0*}$= 1.389

Kopfabrundungsfaktor $\rho_{\alpha P0 *}$=0.25

Werkzeug-Berarbeitungszugabe, d.h. Fertigbearbeitung: 0.0

(* deutet an: modulabhängig)

Nutzkreisdurchmesser: $d_{n1}$ = 195.617mm

Fußkreisdurchmesser: $d_{f1}$ = 189.179 mm

Übergangsdurchmesser Evolvente-Bezier-Kurve, dies entspricht dem relevanten Durchmesser $d_r$: $d_{\overline{u}1}$ = 193.48 mm

Aus diesen Daten ist der Übergangspunkt vom Nutzbereich zum Zahnfußbereich der Verzahnung einfach zu bestimmen, mit Koordinatensystemursprung im Mittelpunkt des Zahnrades mit der Zahnlückenmitte auf der y-Achse.

Eingriffswinkel am Übergangsdurchmesser: $\alpha_{\overline{u}}$ = 14.796°

Zur Bestimmung der Bezierkurve fehlt nun noch der Kontrollpunkt. Auf dem Übergangsdurchmesser wird auf linker sowie rechter Flanke jeweils der Übergangspunkt, hier als Hauptpunkt $P_0$ bzw. $P_3$ bezeichnet, definiert (bei symmetrischer Verzahnung symmetrisch zur y-Achse). An beiden Hauptpunkten wird eine Tangente $t_1$, $t_2$ an die Evolvente angelegt. Der Schnittpunkt der Tangente $t_1$, $t_2$ an die linke Flanke mit der an die rechte Flanke ergibt den Schnittpunkt S.

Die beiden Kontrollpunkte $P_1$ und $P_2$ können nun theoretisch an jeder Stelle der Geraden $\overline{P_o S}$ bzw. $\overline{P_3 S}$ liegen, wobei als Laufparameter die Variable $k \in [0; 1]$ definiert wird.

Nach der Punktebestimmung wird mit dem Bernsteinpolynom eine kubische Gleichung in Vektorschreibweise erstellt:

$$\vec{X}(t) = \vec{D} \cdot t^3 + \vec{C} \cdot t^2 + B \cdot t + \vec{A}$$

Mit:

$$D = \begin{pmatrix} -3.578 \\ 0 \end{pmatrix}$$

$$C = \begin{pmatrix} 5.368 \\ 6.639 \end{pmatrix}$$

$$B = \begin{pmatrix} 1.754 \\ -6.639 \end{pmatrix}$$

$$A = \begin{pmatrix} -1.771 \\ 96.724 \end{pmatrix}$$

Dies erzeugt nun die Bezierkurve.

Als Ergebnis kommt in dieser Berechnung eine Verbesserung von rund 35% gegenüber der herkömmlichen Verzahnung zustande und eine Berechnungseinsparung von bis zu 25 Rechnungen gegenüber der eingangs genannten Verzahnung mit Tangensfunktion und Kreisbogen.

Die Herstellung solcher Zahnräder kann beispielsweise durch in mehreren Achsen frei bewegliche und frei programmierbare Fräs- oder Schleifeinrichtungen oder durch geeignete, von der erfindungsgemäßen Zahnfußform abgeleitete Abwälzfräser erfolgen.

## Patentansprüche

1.   Verzahnung eines Zahnrades mit einer Mehrzahl von Zähnen;

> 1.1 deren Zahnflanken (2, 4) einen Hauptbereich (3) und einen Zahnfußbereich aufweisen; wobei
> 1.2 der Zahnfußbereich sich im Stirnschnitt oder Normalschnitt durch die Drehachse des Zahnrads betrachtet von einem Fußkreis (FP) bis zu einem Hauptkreis ($d_H$) erstreckt; **dadurch gekennzeichnet, dass** - jeweils im Stirnschnitt oder Normalschnitt betrachtet -
> 1.3 die Zahnflanken im Zahnfußbereich ab einem relevanten Durchmesser ($d_r$) in Richtung auf den Fußkreis hin als Bezierkurve (5) ausgebildet sind;
> 1.4 die Bezierkurve im relevanten Durchmesser ($d_r$) jeweils in einem Hauptpunkt ($P_0$, $P_3$) tangentenstetig in das Zahnprofil des Hauptbereichs übergeht.

2.   Verzahnung nach Anspruch 1, **dadurch gekennzeichnet, dass** der Hauptbereich mit einem Nutzbereich zusammenfällt, welcher den Bereich der Verzahnung umfasst, der von einem Kopfkreis bis zu einem Nutzkreis ($d_N$) der Verzahnung verläuft.

3.   Verzahnung nach Anspruch 1, **dadurch gekennzeichnet, dass** die Verzahnung als Außenverzahnung ausgeführt ist und bei Vorsehen einer Protuberanz (6) umfassend ein Protuberanzprofil, der Hauptbereich einen Nutzbereich aufweist, welcher den Bereich der Verzahnung umfasst, der von einem Kopfkreis bis zu einem Nutzkreis ($d_N$) der Verzahnung verläuft, wobei der Hauptbereich zusätzlich zum Nutzbereich einen Protuberanzbereich umfasst, in dem die Protuberanz (6) angeordnet ist, wobei der Protuberanzbereich zwischen dem Nutzkreis ($d_N$) und einem radial innerhalb des Nutzkreises ($d_N$) angeordneten Protuberanzkreis ($d_P$) verläuft.

4.   Verzahnung nach Anspruch 1, **dadurch gekennzeichnet**, die Verzahnung als Innenverzahnung ausgeführt ist und bei Vorsehen einer Protuberanz (6) umfassend ein Protuberanzprofil, der Hauptbereich einen Nutzbereich aufweist, welcher den Bereich der Verzahnung umfasst, der von einem Kopfkreis bis zu einem Nutzkreis ($d_N$) der Verzahnung verläuft, wobei der Hauptbereich zusätzlich zum Nutzbereich einen Protuberanzbereich umfasst, in dem die Protuberanz (6) angeordnet ist, wobei der Protuberanzbereich zwischen dem Nutzkreis ($d_N$) und einem radial außerhalb des Nutzkreises ($d_N$) angeordneten Protuberanzkreis ($d_P$) verläuft.

5.   Verzahnung nach Anspruch 3 oder 4, **dadurch gekennzeichnet, dass** der tangentenstetige Übergang zwischen dem Protuberanzprofil und der Bezierkurve um einen Fußfreischnitt ($F_S$) von der Zahnflanke beabstandet ist.

6.   Verzahnung nach einem der Ansprüche 1 bis 5, **dadurch gekennzeichnet, dass** der relevante Durchmesser ($d_r$) mit dem Hauptkreis ($d_H$) zusammenfällt.

**7.** Verzahnung nach einem der Ansprüche 1 bis 6, **dadurch gekennzeichnet, dass** die Bezierkurve wenigstens zwei Kontrollpunkte ($P_1$, $P_2$) aufweist, die im Zahnfußbereich jeweils auf einer Tangente ($t_1$, $t_2$) an dem Hauptpunkt ($P_0$, $P_3$) liegen.

**8.** Verzahnung nach einem der Ansprüche 1 bis 7, **dadurch gekennzeichnet, dass** die Bezierkurve eine Bezierkurve dritten oder höheren Grades, insbesondere eine kubische Bezierkurve ist, umfassend genau zwei Kontrollpunkte ($P_1$, $P_2$) von denen ein jeder auf der entsprechenden, durch den Hauptpunkt ($P_0$, P3) verlaufenden Tangente ($t_1$, $t_2$) liegt, wobei der Abstand (k) eines jeden Kontrollpunkts ($P_1$, $P_2$) zu seinem Hauptpunkt ($P_0$, $P_3$) auf der Tangente ($t_1$, $t_2$) sich wie folgt berechnet:

$$k = (0{,}25 + 0{,}1 \times f) \times l$$

mit:

$0 < k \leq 1$ und $0 \leq f \leq 3$,

wobei l für den Abstand des einen Hauptpunkts ($P_0$, $P_3$) vom Schnittpunkt (S) der Tangenten ($t_1$, $t_2$) steht.

**9.** Verzahnung nach Anspruch 8, **dadurch gekennzeichnet, dass** der Faktor f bevorzugt zwischen 0,5 und 1,5 beträgt.

**10.** Verzahnung nach einem der Ansprüche 1 bis 9, **dadurch gekennzeichnet, dass** die Zahnflanken von im Stirnschnitt oder Normalschnitt benachbarten Zähnen jeweils symmetrisch zueinander ausgebildet sind, wobei die Symmetrieachse (y) den Fußkreis im Fußpunkt schneidet und die Tangenten ($t_1$, $t_2$) symmetrisch zur Symmetrieachse (y) verlaufen, und sich bei Vorsehen einer Außenverzahnung radial innerhalb, und bei Vorsehen einer Innenverzahnung radial außerhalb des relevanten Durchmessers ($d_r$) in einem Schnittpunkt (S) schneiden.

**11.** Verzahnung nach einem der Ansprüche 1 bis 9, **dadurch gekennzeichnet, dass** die Zahnflanken von im Stirnschnitt oder Normalschnitt benachbarten Zähnen jeweils asymmetrisch zueinander ausgebildet sind.

**12.** Verzahnung nach einem der Ansprüche 1 bis 11, **dadurch gekennzeichnet, dass** die Bezierkurve ein Kontrollpolygon aufweist, wobei das gesamte Kontrollpolygon, welches die Hauptpunkte ($P_0$, $P_3$) sowie die wenigstens zwei Kontrollpunkte ($P_1$, $P_2$) miteinander verbindet, innerhalb der von den Tangenten ($t_1$, $t_2$) und der Bezierkurve (5) aufgespannten Fläche liegt.

## Claims

**1.** Toothing of a gearwheel having a plurality of teeth:

1.1 the tooth flanks (2, 4) of which have a main area (3) and a tooth root area;
1.2 as viewed in the transverse section or normal section through the axis of rotation of the gearwheel, the tooth root area extending from a root circle (FP) as far as a main circle ($d_H$) ; **characterized in that** - in each case viewed in the transverse section or normal section -
1.3 the tooth flanks in the tooth root area are formed as a Bézier curve (5) beginning from a relevant diameter ($d_r$) in the direction of the root circle;
1.4 the Bézier curve in the relevant diameter ($d_r$) in each case merges tangentially continuously into the tooth profile of the main area at a main point ($P_0$, $P_3$).

**2.** Toothing according to Claim 1, **characterized in that** the main area coincides with a useful area which comprises the area of the toothing which extends from a tip circle as far as a useful circle ($d_N$) of the toothing.

**3.** Toothing according to Claim 1, **characterized in that** the toothing is designed as external toothing and, when a protuberance (6) comprising a protuberance profile is provided, the main area has a useful area which comprises the area of the toothing which extends from a tip circle as far as a useful circle ($d_N$) of the toothing, wherein the main area comprises, in addition to the useful area, a protuberance area in which the protuberance (6) is arranged, wherein the protuberance area extends between the useful circle ($d_N$) and a protuberance circle ($d_p$) arranged

radially inside the useful circle ($d_N$).

4. Toothing according to Claim 1, **characterized in that** the toothing is designed as internal toothing and, when a protuberance (6) comprising a protuberance profile is provided, the main area has a useful area which comprises the area of the toothing which extends from a tip circle as far as a useful circle ($d_N$) of the toothing, wherein the main area comprises, in addition to the useful area, a protuberance area in which the protuberance (6) is arranged, wherein the protuberance area extends between the useful circle ($d_N$) and a protuberance circle ($d_p$) arranged radially outside the useful circle ($d_N$).

5. Toothing according to Claim 3 or 4, **characterized in that** the tangentially continuous transition between the protuberance profile and the Bézier curve is spaced apart from the tooth flank by an undercut section ($F_s$).

6. Toothing according to one of Claims 1 to 5, **characterized in that** the relevant diameter ($d_r$) coincides with the main circle ($d_H$).

7. Toothing according to one of Claims 1 to 6, **characterized in that** the Bézier curve has at least two control points ($P_1$, $P_2$), which are located in the tooth root area, in each case on a tangent ($t_1$, $t_2$) at the main point ($P_0$, $P_3$).

8. Toothing according to one of Claims 1 to 7, **characterized in that** the Bézier curve is a Bézier curve of third or higher order, in particular a cubic Bézier curve, comprising exactly two control points ($P_1$, $P_2$), of which one is located on the corresponding tangent ($t_1$, $t_2$) extending through the main point ($P_0$, $P_3$), wherein the distance (k) of each control point ($P_1$, $P_2$) to its main point ($P_0$, $P_3$) on the tangent ($t_1$, $t_2$) is calculated as follows:

```
k = (0.25 + 0.1 x f) x l
```

where

$0 < k \leq 1$ and $0 \leq f \leq 3$,

where l represents the distance of the one main point ($P_0$, $P_3$) from the point of intersection (S) of the tangents ($t_1$, $t_2$).

9. Toothing according to Claim 8, **characterized in that** the factor f is preferably between 0.5 and 1.5.

10. Toothing according to one of Claims 1 to 9, **characterized in that** the tooth flanks of adjacent teeth in the transverse section or normal section are each formed symmetrically relative to one another, wherein the axis of symmetry (y) intersects the root circle at the root point and the tangents ($t_1$, $t_2$) extend symmetrically relative to the axis of symmetry (y), and when external toothing is provided, intersect radially inside and, when internal toothing is provided, intersect radially outside the relevant diameter ($d_r$) at a point of intersection (S).

11. Toothing according to one of Claims 1 to 9, **characterized in that** the tooth flanks of adjacent teeth in the transverse section or normal section are each formed asymmetrically relative to one another.

12. Toothing according to one of Claims 1 to 11, **characterized in that** the Bézier curve has a control polygon, wherein the entire control polygon, which connects the main points ($P_0$, $P_3$) and the at least two control points ($P_1$, $P_2$) to one other, lies within the area spanned by the tangents ($t_1$, $t_2$) and the Bézier curve (5).

**Revendications**

1. Denture d'une roue dentée comprenant une pluralité de dents ;

    1.1 dont les flancs de dents (2, 4) présentent une région principale (3) et une région de pied de dent ;
    1.2 la région de base de dent s'étendant, vu en coupe frontale ou en coupe normale à travers l'axe de rotation de la roue dentée, depuis un cercle de pied (FP) jusqu'à un cercle principal ($d_H$) ; **caractérisée en ce que**, dans chaque cas en vue en coupe frontale ou en coupe normale,
    1.3 les flancs de dents dans la région de pied de dent sont réalisés, à partir d'un diamètre pertinent ($d_r$) dans

la direction du cercle de pied sous forme de courbe de Bézier (5) ;

1.4 la courbe de Bézier dans le diamètre pertinent ($d_r$) se prolonge à chaque fois en un point principal ($P_0$, $P_3$) avec une continuité de tangente par le profil de dent de la région principale.

2. Denture selon la revendication 1, **caractérisée en ce que** la région principale coïncide avec une région utile qui comprend la région de la denture qui s'étend depuis un cercle de tête jusqu'à un cercle utile ($d_N$) de la denture.

3. Denture selon la revendication 1, **caractérisée en ce que** la denture est réalisée sous forme de denture extérieure et lorsqu'une protubérance (6) comprenant un profil de protubérance est prévue, la région principale présente une région utile qui comprend la région de la denture qui s'étend depuis un cercle de tête jusqu'à un cercle utile ($d_N$) de la denture, la région principale comprenant en plus de la région utile une région de protubérance dans laquelle est disposée la protubérance (6), la région de protubérance s'étendant entre le cercle utile ($d_N$) et un cercle de protubérance ($d_P$) disposé radialement à l'intérieur du cercle utile ($d_N$).

4. Denture selon la revendication 1, **caractérisée en ce que** la denture est réalisée sous forme de denture intérieure et lorsqu'une protubérance (6) comprenant un profil de protubérance est prévue, la région principale présente une région utile qui comprend la région de la denture qui s'étend depuis un cercle de tête jusqu'à un cercle utile ($d_N$) de la denture, la région principale comprenant en plus de la région utile une région de protubérance dans laquelle est disposée la protubérance (6), la région de protubérance s'étendant entre le cercle utile ($d_N$) et un cercle de protubérance ($d_P$) disposé radialement à l'extérieur du cercle utile ($d_N$).

5. Denture selon la revendication 3 ou 4, **caractérisée en ce que** la transition avec une continuité de tangente entre le profil de protubérance et la courbe de Bézier est espacée par une découpe de pied ($F_S$) du flanc de dent.

6. Denture selon l'une quelconque des revendications 1 à 5, **caractérisée en ce que** le diamètre pertinent ($d_r$) coïncide avec le cercle principal ($d_H$).

7. Denture selon l'une quelconque des revendications 1 à 6, **caractérisée en ce que** la courbe de Bézier présente au moins deux points de contrôle ($P_1$, $P_2$) qui sont situés dans la région de pied de dent à chaque fois sur une tangente ($t_1$, $t_2$) au point principal ($P_0$, $P_3$).

8. Denture selon l'une quelconque des revendications 1 à 7, **caractérisée en ce que** la courbe de Bézier est une courbe de Bézier de troisième ordre ou d'ordre supérieur, en particulier une courbe de Bézier cubique, comprenant exactement deux points de contrôle ($P_1$, $P_2$) dont chacun est situé sur la tangente ($t_1$, $t_2$) s'étendant à travers le point principal ($P_0$, $P_3$), la distance (k) de chaque point de contrôle ($P_1$, $P_2$) à son point principal ($P_0$, $P_3$) sur la tangente ($t_1$, $t_2$) se calculant comme suit :

$$k = (0,25 + 0,1 \text{ x } f) \text{ x } I$$

où :

$0 < k \leq 1$ et $0 \leq f \leq 3$,

I étant la distance d'un point principal ($P_0$, $P_3$) au point d'intersection (S) des tangentes ($t_1$, $t_2$).

9. Denture selon la revendication 8, **caractérisée en ce que** le facteur f est de préférence compris entre 0,5 et 1,5.

10. Denture selon l'une quelconque des revendications 1 à 9, **caractérisée en ce que** les flancs de dents de dents adjacentes en coupe frontale ou en coupe normale sont à chaque fois réalisés de manière symétrique les uns par rapport aux autres, l'axe de symétrie (y) coupant le cercle de pied au point de base et les tangentes ($t_1$, $t_2$) s'étendant symétriquement par rapport à l'axe de symétrie (y), et se coupant en un point d'intersection (S) radialement à l'intérieur du diamètre pertinent ($d_r$) dans le cas d'une denture extérieure, et radialement à l'extérieur du diamètre pertinent ($d_r$) dans le cas d'une denture intérieure.

11. Denture selon l'une quelconque des revendications 1 à 9, **caractérisée en ce que** les flancs de dents de dents adjacentes en coupe frontale ou en coupe normale sont à chaque fois réalisés de manière asymétrique les uns par rapport aux autres.

12. Denture selon l'une quelconque des revendications 1 à 11, **caractérisée en ce que** la courbe de Bézier présente un polygone de contrôle, l'ensemble du polygone de contrôle, qui relie les uns aux autres les points principaux ($P_0$, $P_3$) ainsi que les au moins deux points de contrôle ($P_1$, $P_2$), étant situé à l'intérieur de la surface formée par les tangentes ($t_1$, $t_2$) et la courbe de Bézier (5).

Fig. 1

**Fig. 2**

**Fig. 3**

Fig. 4a

Fig. 4b

Fig. 5

EP 2 976 552 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006015521 B3

- DE 102008045318 B3